# EUROPÄISCHE PATENTSCHRIFT

(11) **EP 3 575 483 B1**
(45) Veröffentlichungstag und Bekanntmachung des Hinweises auf die Patenterteilung: **31.03.2021**
(21) Anmeldenummer: 19175081.9
(22) Anmeldetag: 17.05.2019
(51) Int. Cl.: D06F 67/04, D06F 95/00

(54) **VERFAHREN UND VORRICHTUNG ZUM BELADEN EINER KLAMMER MIT EINEM WÄSCHESTÜCK, INSBESONDERE EINEM ZU SORTIERENDEN WÄSCHESTÜCK**
METHOD AND DEVICE FOR LOADING A CLIP WITH A GARMENT, IN PARTICULAR A GARMENT TO BE SORTED
PROCÉDÉ ET DISPOSITIF DE CHARGEMENT D'UNE PINCE DOTÉE D'UN VÊTEMENT, EN PARTICULIER D'UN VÊTEMENT À TRIER

(30) Priorität: 29.05.2018 DE 102018004271
(43) Veröffentlichungstag der Anmeldung: 04.12.2019
(73) Patentinhaber: Herbert Kannegiesser GmbH, 32602 Vlotho (DE)
(72) Erfinder: Bringewatt, Wilhelm, 32457 Porta Westfalica (DE); Heinz, Engelbert, 32602 Vlotho (DE); Sielermann, Jürgen, 73540 Heubach (DE)
(74) Vertreter: Möller, Friedrich

(56) Entgegenhaltungen:
- EP-A2- 2 336 420
- DE-A1- 3 839 045
- JP-B2- 5 916 063
- US-A1- 2008 092 415

## Beschreibung

Die Erfindung betrifft ein Verfahren zum Beladen einer Klammer mit einem Wäschestück, insbesondere einem zu sortierenden Wäschestück, und eine Vorrichtung zum Beladen einer Klammer mit einem Wäschestück.

An Klammern hängende Wäschestücke werden zu verschiedenen Zwecken durch eine Wäscherei transportiert. Vor allem werden einzelne an jeweils einer Klammer hängende Wäschestücke, insbesondere Schmutzwäschestücke, in Wäschereien sortiert.

Nach dem Vereinzeln der Wäschestücke muss jedes einzelne Wäschestück in eine entlang der Förderstrecke transportierbare Klammer geladen werden. Man ist bestrebt, dieses Beladen zu automatisieren.

Aus der US 2008/092415 A1 ist eine automatische Einrichtung zum Ausbreiten und/oder Falten von zum Beispiel Handtüchern bekannt. Bei dieser Vorrichtung werden die gewaschenen Handtücher von einer Klammer aus einem Wäschehaufen herausgezogen und dabei vereinzelt. Das jeweils vereinzelte Wäschestück wird dann von Spreizklammern ausgebreitet und über einen Förderer gezogen. Von diesem Förderer werden die ausgebreiteten Wäschestücke gegebenenfalls nach Durchlaufen einer Wendestation von das Wäschestück an gegenüberliegenden Ecken haltenden Klammern auf einen Stapeltisch bzw. darauf schon vorher abgelegte Handtücher aufgezogen.

Aus der EP 2 336 420 A2 sind ein Verfahren und eine Vorrichtung zum Zuführen eines Wäschestücks zu einer Mangel oder dergleichen bekannt. Hierbei ist vorgesehen, von jeweils einer Bedienungsperson ein Wäschestück mit einem gestreckten Randbereich in zwei Klammern einzuhängen oder direkt an zwei Klammern zu übergeben, die das Wäschestück hochfahren in eine Position neben einer Spreizeinrichtung, wo das Wäschestück von einer verfahrbaren Klammer ergriffen wird. Diese Klammer zieht das Wäschestück quer über eine Walze einer Aufzieheinrichtung und breitet das Wäschestück dadurch aus, um es anschließend im solchermaßen ausgebreiteten Zustand zum Beispiel einer Mangel zuzuführen.

Der Erfindung liegt die Aufgabe zugrunde, ein Verfahren und eine Vorrichtung zum automatischen Beladen einer Klammer mit einem Wäschestück, insbesondere einem zu sortierenden Wäschestück, zu schaffen, die zuverlässig arbeiten und leistungsfähig sind.

Ein Verfahren zur Lösung dieser Aufgabe weist die Maßnahmen des Anspruchs 1 auf. Bei diesem Verfahren ist es vorgesehen, von einer verfahrbaren Doppelklammer einer Transfereinrichtung das vereinzelte Wäschestück zu ergreifen, das von der Doppelklammer ergriffene Wäschestück von einer Beladeeinrichtung zu übernehmen oder zu übergeben und das Wäschestück von der Beladeeinrichtung in ein Klammermaul der zu beladenden Klammer einzugeben. Durch diese Aufeinanderfolge mehrerer automatischer Arbeitsabläufe können die einzelnen Schritte zum Beladen einer Klammer zuverlässig und auch rascher erfolgen.

Von zwei benachbarten Klammern der Beladeeinrichtung wird durch synchrones Verfahren und Vorbeibewegen der benachbarten Klammern an der zu beladenden Klammer das Wäschestück in die zu beladende Klammer eingegeben. Es findet dadurch ein reibungsloser, quasi fliegender Wechsel des von den benachbarten Klammern der Beladeeinrichtung gehaltenen Bereichs des Wäschestücks an die zu beladende Klammer statt.

Von der Doppelklammer der Transfereinrichtung und/oder benachbarten Klammern der Beladeeinrichtung wird ein zwischen den benachbarten Klammern und/oder den Klammern der Doppelklammer sich befindender Randstreifen oder Randabschnitt des Wäschestücks gestreckt gehalten. Dadurch steht eine definierte, nahezu geradlinig ausgerichtete Kante, nämlich des Randstreifens und/oder des Randabschnitts, des Wäschestücks für die Übergabe an die nachfolgende Klammer der Beladeeinrichtung und/oder der zu beladenden Klammer zur Verfügung. Das macht den Übergabevorgang des Wäschestücks von einer Klammer zur anderen zuverlässiger und sorgt für ein rasches und sicheres automatisches Ergreifen des Wäschestücks von der nächsten Klammer. Der Randstreifen bzw. Randabschnitt befindet sich bevorzugt in einem Eckbereich des Wäschestücks oder geht von einer Ecke desselben aus.

Beim Verfahren wird das Wäschestück mit gestreckt von den Klammern der Beladeeinrichtung gehaltenem Randstreifen, Randabschnitt und/oder Eckbereich beim Vorbeibewegen der benachbarten Klammern der Beladeeinrichtung an der zu beladenden Klammer in dieselben eingeschoben. Das lässt einen raschen Wechsel des definierten gehaltenen Randstreifens oder dergleichen des Wäschestücks von der jeweiligen Klammer zur anderen zu. Dieser Wechsel kann vor allem rasch und zuverlässig frei von manuellen Tätigkeiten erfolgen.

Es kann vorgesehen sein, dass von den Doppelklammern der von den beabstandeten parallelen Klammern derselben gestreckt gehaltene Randstreifen, Randbereich und/oder Eckbereich des Wäschestücks umorientierbar bzw. verdrehbar und/oder verschwenkbar ist. Das ermöglicht es, die Doppelklammer einerseits zur Übernahme des Wäschestücks von der Vereinzelungseinrichtung und andererseits zur Übergabe des Wäschestücks an die Beladeeinrichtung in die optimale Position zu bringen, wobei die Umorientierbarkeit der Doppelklammer es zulässt, dass die Übernahme und Weitergabe bzw. Übergabeposition des Wäschestücks voneinander abweichen.

Besonders vorteilhaft kann das Verfahren weitergebildet sein, wenn die zu beladende Klammer zum Übernehmen eines Wäschestücks von den beiden benachbarten Klammern der Beladeeinrichtung in einem unteren Umlenkbereich eines U-förmigen Abschnitts der Förderstrecke ihres Förderers kurzfristig abgestoppt wird, wobei die Beladung dieser Klammer während des momentanen Stillstands besonders zuverlässig erfolgen kann.

Eine weitere bevorzugte Weiterbildungsmöglichkeit des Verfahrens sieht es vor, dass die zu beladende Klammer quer zur vertikalen Ebene verläuft, in der der U-förmige Abschnitt der Förderstrecke, an dem das Beladen der zu beladenden Klammer stattfindet, verläuft. Beim in dieser Ebene ausgerichteten Klammermaul wird dann die bereitgehaltene Klammer mit dem Wäschestück beladen. Dadurch verläuft der zum Beladen der Klammer dienende U-förmige Abschnitt der Förderstrecke in einer Ebene quer zur Bewegungsbahn der beiden das Wäschestück in die zu beladende Klammer eingebenden benachbarten Klammern der Beladeeinrichtung, Dadurch stört die Beladeeinrichtung nach der Übergabe eines Wäschestücks in eine zu beladende Klammer nicht beim Fortbewegen der beladenen Klammer entlang der Förderstrecke, insbesondere des U-förmig verlaufenden Bereichs der Förderstrecke, an dem die Beladung der Klammer der Förderstrecke stattfindet. Die beladene Klammer kann sogleich nach Abschluss ihrer Beladung weiterbewegt werden, um das übernommene Wäschestück rasch aus dem Bereich der Beladung herauszubewegen, um Platz zur Beladung einer nächsten Klammer mit einem nachfolgenden Wäschestück zu machen und die zuletzt beladene Klammer rasch weiterzubewegen, insbesondere entlang einer Sortierstrecke zum Sortieren von Wäschestücken. Die Sortierleistung kann dadurch erhöht werden.

Eine andere Ausgestaltungsmöglichkeit des Verfahrens sieht es vor, dass die Beladeeinrichtung mindestens einen vorzugsweise zungen- oder schwertartigen Schieber aufweist, der das jeweilige Wäschestück mit dem von der Doppelklammer gehaltenen Eckbereich oder dergleichen in das Klammermaul der zu beladenen Klammer einschiebt. Bei dieser Ausgestaltungsmöglichkeit des Verfahrens braucht die Beladeeinrichtung das Wäschestück zur Oberführung desselben an die zu beladende Klammer nicht zu ergreifen.

Eine Vorrichtung zur Lösung der eingangs genannten Aufgabe weist die Merkmale des Anspruchs 5 auf. Bei dieser Vorrichtung sind eine Transfereinrichtung mit mindestens einer Doppelklammer und eine der Transfereinrichtung nachgeordnete Beladeeinrichtung vorgesehen, wobei von der Beladeeinrichtung das jeweilige Wäschestück in die zu beladende Klammer überführbar und/oder einsetzbar ist. Durch das Vorsehen der Transfereinrichtung und der Beladeeinrichtung sowie der Ausbildung der Transfereinrichtung mit mindestens einer Doppelklammer erfolgt eine spezifische Aufteilung der Aufgaben beim Beladen der der nachfolgenden Förderstrecke zugeordneten jeweiligen Klammer. Die einzelnen Einrichtungen verfügen dadurch über wenig komplexe Funktionen. Die Einrichtungen lassen sich dadurch einfach ausgestalten und kompakt ausbilden. Es sind so einfache und präzise Bewegungsabläufe der einzelnen Einrichtung zum Beladen der jeweiligen Klammer der Förderstrecke möglich. Die einzelnen aufeinanderfolgenden Einrichtungen brauchen jeweils nur kurze Transportwege aufzuweisen, was die Taktzeit für das Beladen der jeweiligen Klammer mit einem vereinzelten Wäschestück verkürzt.

Bei der Vorrichtung ist es außerdem vorgesehen, dass die Beladeeinrichtung zwei benachbarte Klammern aufweist, die zum Übernehmen des von den Klammern der Doppelklammer gehaltenen Wäschestücks ausgebildet sind. Insbesondere sind die Klammern so ausgebildet und mit einem solchen Abstand versehen, dass sie zum direkten Übernehmen, insbesondere Greifen, des zwischen der Doppelklammer der Transfereinrichtung gestreckt gehaltenen schmalen Randstreifens bzw. schmalen Abschnitts des Rands des Wäschestücks ausgebildet sind.

Eine vorteilhafte Weiterbildung der Vorrichtung sieht es vor, dass die Doppelklammer verdrehbar und alternativ oder zusätzlich verschwenkbar ist. Verdrehbar ist die Doppelklammer vorzugsweise um eine Drehachse, die eine gedachte Verbindungslinie zwischen den beiden Klammern der Doppelklammer senkrecht schneidet. Dadurch bewegen sich die beiden Klammern beim Verdrehen der Doppelklammer nach Art eines Propellers um die Drehachse herum. Dadurch lässt sich das von der Doppelklammer gehaltene Wäschestück von einer Übernahmestellung des Wäschestücks vom Vereinzeler umorientieren in eine zum Überführen des Wäschestücks zur nachfolgenden Beladeeinrichtung optimalen Position. Dieses Verdrehen der Doppelklammer kann während des Verfahrens desselben zur Beladeeinrichtung erfolgen, so dass durch überlagerte Bewegungen nur eine kurze Taktzeit zum Überführen des jeweiligen vereinzelten Wäschestücks von der Vereinzelungseinrichtung zur Beladeeinrichtung bei gleichzeitigem Umorientieren des Wäschestücks erforderlich ist. Durch ein Verschwenken der Doppelklammer kann der von derselben straff gehaltene Randstreifen des Wäschestücks auch oder alternativ zum Verdrehen in die gewünschte Übergabeposition zu den Klammern der Beladeeinrichtung gebracht werden.

Gemäß einer vorteilhaften Möglichkeit zur Weiterbildung der Vorrichtung ist es vorgesehen, dass der Randstreifen bzw. -abschnitt von einer Ecke, insbesondere einer beliebigen Ecke, des Wäschestücks ausgeht. Dann hält die Doppelklammer quasi einen Eckbereich des Wäschestücks, wobei der zu diesem Eckbereich gehörende schmale Abschnitt des Rands des Wäschestücks zwischen den beiden benachbarten und beabstandeten Klammern der Doppelklammer gestreckt und/oder gestrafft gehalten ist. Das erleichtert die Übergabe des Wäschestücks an die nachfolgende Beladeeinrichtung.

Besonders vorteilhaft ist es, wenn der von den beiden benachbarten, beabstandeten Klammern der Beladeeinrichtung zu übernehmende Randstreifen oder schmale Abschnitt des Rands von einer vorzugsweise beliebigen Ecke des Wäschestücks ausgeht. Dann ergreifen die beiden benachbarten Klammern der Beladeeinrichtung den gestreckten schmalen Randabschnitt bzw. Randstreifen oder Eckbereich, der von einer Ecke des Wäschestücks ausgeht oder von dieser auch beabstandet sein kann. Dies ermöglicht es, das Wäschestück mit einem Eckbereich bzw. einer Ecke in die zu beladende Klammer einzugeben und somit die jeweilige Klammer der Förderstrecke mit einer Ecke bzw. einem Eckbereich, Eckabschnitt oder dergleichen eines Wäschestücks zu beladen.

Bevorzugt ist es vorgesehen, dass der lichte Abstand der benachbarten Klammern der Doppelklammer der Transfereinrichtung größer ist als der außenseitige Abstand der benachbarten Klammern der Beladeeinrichtung. Dadurch können die benachbarten Klammern der Beladeeinrichtung zum Übernehmen eines Wäschestücks aus der Doppelklammer zwischen die benachbarten Klammern derselben fahren und gezielt den zwischen denselben gehaltenen Randabschnitt und/oder Eckbereich des Wäschestücks erfassen. Das gestattet ein zuverlässiges und gleichwohl rasches Übernehmen des Wäschestücks von der Beladeeinrichtung aus der Doppelklammer der Transfereinrichtung.

Weiterhin ist es bevorzugt vorgesehen, den lichten, inneren Abstand der benachbarten Klammern der Beladeeinrichtung so groß zu wählen, dass er größer ist als vorzugsweise die gleiche Breite aller zu beladener Klammern des Förderers. Dadurch wird der zwischen den benachbarten, beabstandeten Klammern der Beladeeinrichtung gestreckt gehaltene Randabschnitt und/oder Eckbereich des Wäschestücks beim Vorbeifahren der benachbarten Klammern der Beladeeinrichtung an der jeweiligen zu beladenden Klammer gezielt in das Klammermaul desselben eingeschoben. Bei dieser Übergabe steht vorzugsweise die jeweils zu beladende Klammer momentan still, während die benachbarten Klammern der Beladeeinrichtung kontinuierlich an dieser Klammer vorbeibewegt werden. Dabei findet gleichzeitig ein Einschieben des Randabschnitt bzw. Eckbereichs des Wäschestücks in das Klammermaul der zu beladenden Klammer und ein Herausziehen des Randabschnitts und/oder Eckbereichs des Wäschestücks aus den benachbarten Klammern der Beladeeinrichtung statt. Ein solcher Übergabevorgang erfolgt rasch und zuverlässig, quasi "fließend".

Gemäß einer vorteilhaften Weiterbildungsmöglichkeit der Vorrichtung sind die benachbarten Klammern der Beladeeinrichtung längs einer bei der Übergabe auf der Drehachse der Doppelklammer liegenden geradlinigen Übergabebahn hin- und herfahrbar. Die Beladeeinrichtung braucht dadurch nur eine einfache Linearbewegung auszuführen, um das Wäschestück aus der Doppelklammer der Transfereinrichtung zu übernehmen und in das Klammermaul der bereitgehaltenen zu beladenen Klammer einzuschieben. Diese beiden Übernahme- und Übergabevorgänge lassen sich allein durch Bewegung der beiden beabstandeten, benachbarten Klammern der Beladeeinrichtung längs ihrer geradlinigen Übergabebahn realisieren.

Das vorstehend beschriebene Verfahren und die Vorrichtung eignen sich besonders zum Beladen von Klammern, die von einem Förderer eines Transportsystems auf einer Förderstrecke einer Sortiereinrichtung verfahren werden. Das beschriebene Verfahren und die Vorrichtung eignen sich auch besonders zum Sortieren von Wäschestücken, insbesondere zum Sortieren von Schmutzwäsche.

Ein bevorzugtes Ausführungsbeispiel der Erfindung wird nachfolgend anhand der Zeichnung näher erläutert. In dieser zeigen:

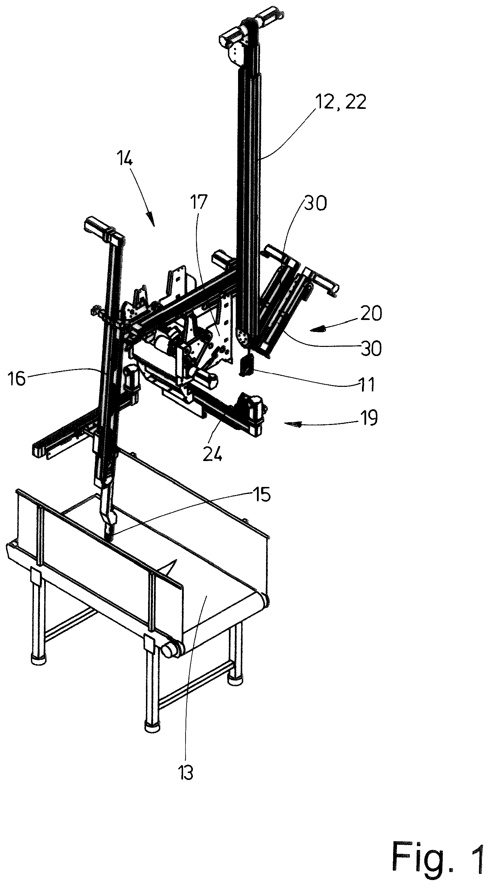

- Fig. 1: eine perspektivische Ansicht der Vorrichtung,

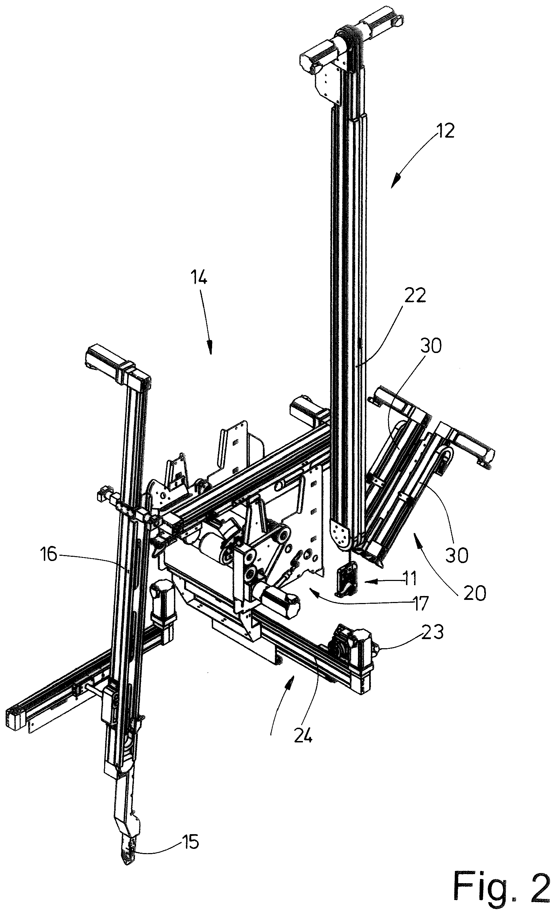

- Fig. 2: eine vergrößerte perspektivische Darstellung eines Teils der Vorrichtung der Fig. 1,

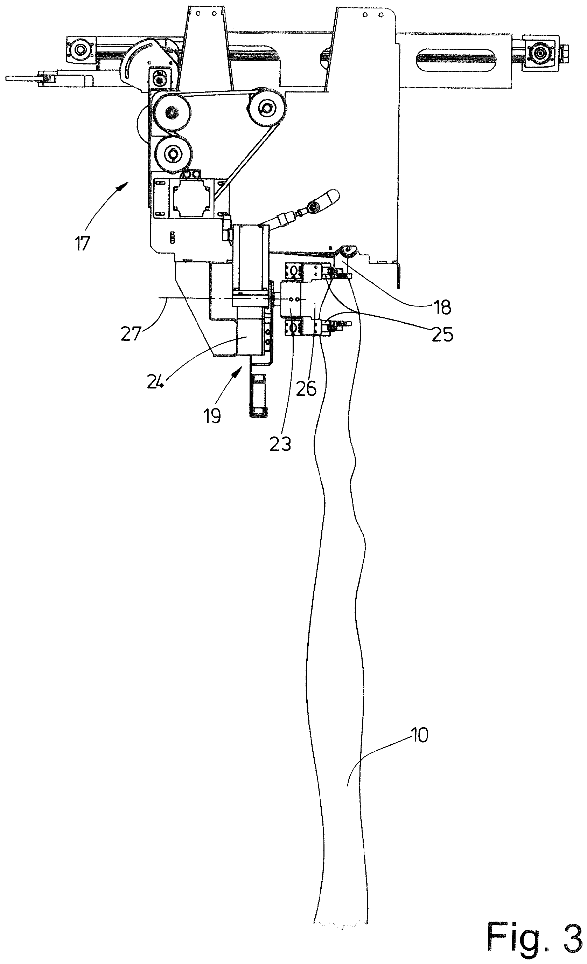

- Fig. 3: eine Seitenansicht einer einem Vereinzeler nachgeordneten Transfereinrichtung,

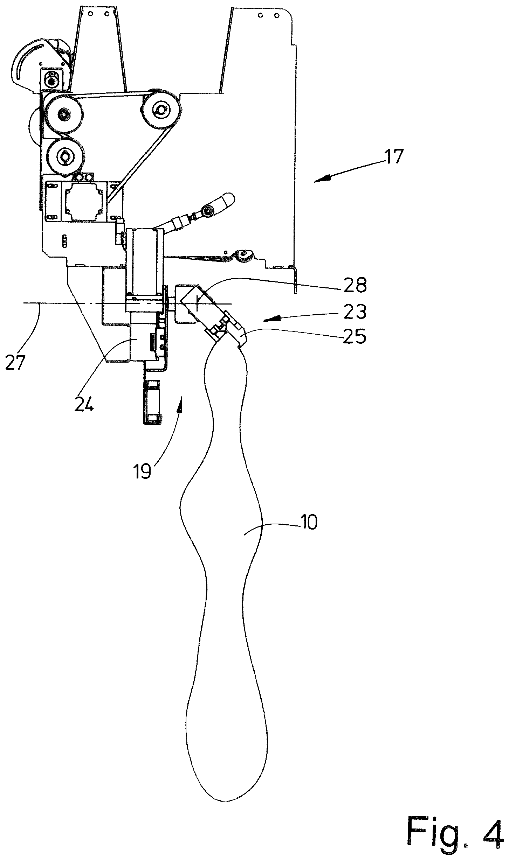

- Fig. 4: die Transfereinrichtung der Fig. 3 bei einer verschwenkten Stellung Ihrer Doppelklammer,
- Fig. 5: eine perspektivische Darstellung des Vereinzelers und der dieser nachgeordneten Transfereinrichtung in einer Übergabestellung eines Wäschestücks,
- Fig. 6: eine Seitenansicht der Doppelklammer der Transfereinrichtung und einer darauffolgenden Beladeeinrichtung,
- Fig. 7: eine perspektivische Darstellung der Doppelklammer und der Beladeeinrichtung in einer Übergabestellung des Wäschestücks von der Doppelklammer in zwei benachbarte, beabstandete Klammern der Beladeeinrichtung,
- Fig. 8: eine perspektivische Ansicht des von den beiden Klammern der Beladeeinrichtung in ein Klammermaul einer zu beladenden Klammer an einen Förderer eingehängten Wäschestücks, und
- Fig. 9: eine Seitenansicht zur Darstellung der Fig. 8.

Die Vorrichtung ist in den Figuren nur mit ihren funktionellen Teilen, insbesondere zur Durchführung des Verfahrens dienenden funktionellen Teilen, aber ohne ihr rahmenartiges Gestell und ihr Gehäuse dargestellt. Das rahmenartige Gestell und das Gehäuse der Vorrichtung sind zum Zwecke der besseren Erkennbarkeit der funktionellen Teile der Vorrichtung und deshalb in den Figuren weggelassen.

Die Vorrichtung dient dazu, vereinzelte Wäschestücke 10 aus einem Wäschehaufen in aufeinanderfolgende, zu beladende Klammern 11 einzugeben. Die Klammern 11 hängen an einem nur teilweise in den Figuren dargestellten Förderer 12, der die einzelnen Wäschestücke 10 in der Wäscherei längs einer entsprechenden Förderstrecke weitertransportiert.

Bevorzugt dient der Förderer 12 dazu, mit jeweils einem Wäschestück 10 beladene Klammern 11 längs ihrer Förderstrecke durch eine Sortierstation zu transportieren und dabei die Wäschestücke 10 gemäß vorgegebenen Sortierkriterien zu sortieren. Die Vorrichtung hat dabei die Aufgabe, die am Förderer 12 hängenden Klammern 11 mit einzelnen Wäschestücken 10 automatisch zu beladen.

Bei den Wäschestücken kann es sich um Flachwäsche wie zum Beispiel Tischdecken, Bettbezüge oder dergleichen oder auch um Formteile, beispielsweise Hosen, Kittel, Hemden oder dergleichen, handeln.

Bevorzugt belädt die Vorrichtung die Klammern 11 des Förderers 12 mit Wäschestücken 10, die sortiert und anschließend gewaschen oder in sonstiger Weise gereinigt werden. Die Vorrichtung ist dann vor einer Schmutzwäschesortierung angeordnet, bei der die an den Klammern 11 hängenden Wäschestücke 10 vom Förderer 12 durch die mindestens eine Sortierstation transportiert und dabei insbesondere nach ihren Waschkriterien sortiert werden, woraufhin die Wäschestücke 10, insbesondere Schmutzwäschestücke, gezielt gewaschen oder in einer sonstigen Weise gereinigt werden.

Im Anfangsbereich der Vorrichtung befindet sich ein horizontaler oder gegebenenfalls auch geneigter Postenzuförderer, der im gezeigten Ausführungsbeispiel als ein Gurtförderer 13 ausgebildet ist. Vom Gurtförderer 13 ist ein in den Figuren nicht gezeigter Wäschehaufen oder Wäscheposten aus einer Vielzahl vorzugsweise unterschiedlicher Wäschestücke 10, insbesondere Schmutzwäschestücke, an eine Vereinzelungseinrichtung 14 der Vorrichtung herantransportierbar. Der Gurtförderer 13 ist so antreibbar, dass ein den Wäschehaufen tragendes Obertrum desselben sich zur Vereinzelungseinrichtung 14 bewegt.

Die hier gezeigte Vereinzelungseinrichtung 14 arbeitet in zwei Stufen, nämlich mit einer Vorvereinzelung und mit einer Nachvereinzelung. Hierauf ist die Erfindung aber nicht beschränkt.

Die Vereinzelungseinrichtung 14 verfügt über einen die Vorvereinzelung vornehmenden Greifer 15. Idealerweise erfasst der Greifer 15 immer nur ein einziges Wäschestück 10 aus dem Wäschehaufen auf dem Gurtförderer 13 heraus. Er kann aber auch gleichzeitig mehrere Wäschestücke 10 gleichzeitig aus dem Wäschehaufen herauspicken, wenn - wie im gezeigten Ausführungsbeispiel - die Vorrichtung eine Nachvereinzelung zulässt.

An mindestens einer geeigneten Stelle ist dem Wäschehaufen auf dem Gurtförderer 13 mindestens eine bildgebende Einrichtung zugeordnet. Dabei kann es sich um mehrere, an unterschiedlichen Orten angeordnete zweidimensionale Kameras oder auch eine einzige dreidimensionale Kamera handeln. Die mindestens eine, in den Figuren nicht gezeigte bildgebende Einrichtung kann den Wäschehaufen auf dem Gurtförderer 13 erkennen, und so eine für einen Greifer 15 der Vereinzelungseinrichtung 14 günstige oder günstigste Stelle des Wäschehaufens detektieren, an der der Greifer 15 am besten nach Möglichkeit ein einziges Wäschestück 10 ergreifen und aus dem Wäschehaufen herausziehen kann.

Das oder jedes vom Greifer 15 an der von der bildgebenden Einrichtung bestimmten Position erfasste Wäschestück 10 wird nach oben aus dem Wäschehaufen herausgezogen durch ein Hochfahren des Greifers 15 mittels eines dieses tragenden Shuttlezylinders 16. Es wird das idealerweise einzige Wäschestück 10 vom Greifer 15 an einer beliebigen Stelle ergriffen und aus dem Wäschehaufen herausgezogen. Das vom Greifer 15 an einer beliebigen Stelle ergriffene Wäschestück 10 oder gegebenenfalls auch mehrere gleichzeitig vom Greifer 15 an beliebigen, auch verschiedenen, Stellen ergriffene Wäschestücke 10 werden anschließend vom Greifer 15 entweder direkt an eine Nachvereinzelungseinrichtung 17, die vorzugsweise Bestandteil der Vereinzelungseinrichtung 14 ist, übergeben oder der Greifer 15 übergibt das oder jedes gehaltene Wäschestück 10 zunächst an eine Klammer, die das einzelne Wäschestück 10 oder mehrere Wäschestücke 10 der Nachvereinzelungseinrichtung 17 zuführt.

Befindet sich in der Nachvereinzelungseinrichtung 17 nur ein einzelnes Wäschestück 10, wird dieses durch die Nachvereinzelungseinrichtung 17 derart hindurchtransportiert, dass sich eine hintere Ecke 18 des Wäschestücks 10 in der Nachvereinzelungseinrichtung 17 ausbildet. Dabei hängt das Wäschestück 10 an der Ecke 18 unter der Nachvereinzelungseinrichtung 17, wobei die hintere Ecke 18 des Wäschestücks 10 von der Nachvereinzelungseinrichtung 17 kurzfristig fest- und/oder zurückgehalten wird. Bei mehreren, insbesondere zwei, gleichzeitig in die Nachvereinzelungseinrichtung 17 gelangten Wäschestücken 10 bilden sich zwei aufeinanderfolgende hintere Ecken 18 der beiden Wäschestücke 10 aus. Beim Durchlaufen, vorzugsweise nach dem Durchlaufen, beider Wäschestücke 10 durch die Nachvereinzelungseinrichtung 17 wird von dieser nur die nacheilende hintere Ecke 18 eines einzigen Wäschestücks 10 festgehalten, sodass das andere Wäschestück 10 nach dem Durchlaufen der Nachvereinzelungseinrichtung 17 von derselben fallengelassen wird. Dieses Wäschestück 10 kann durch einen nicht gezeigten Rückführförderer zum Wäschehaufen auf den Gurtförderer 13 zurücktransportiert werden.

In erfindungsgemäß besonderer Weise ist nun die Vorrichtung hinter der Nachvereinzelungseinrichtung 17 ausgebildet. Dazu verfügt die Vorrichtung über eine auf die Nachvereinzelungseinrichtung 17 folgende Transfereinrichtung 19 und eine dieser nachgeordneten Beladeeinrichtung 20. Die Transfereinrichtung 19 übernimmt ein vereinzeltes Wäschestück 10 an oder nahe der hinteren Ecke 18 von der Nachvereinzelungseinrichtung 17 und übergibt das Wäschestück 10 mit der von der Transfereinrichtung 19 gehaltenen Stelle an die Beladeeinrichtung 20. Von der Beladeeinrichtung 20 wird danach die gleiche Stelle, vorzugsweise die hintere Ecke 18, des Wäschestücks 10 in ein Klammermaul 21 der zu beladenden Klammer 11 des Förderer 12, und zwar einem unteren Umlenkende eines U-förmig verlaufenden Beladeabschnitts 22 des Förderers 12, eingeschoben.

Die Transfereinrichtung 19 verfügt über einen Linearantrieb, der eine Doppelklammer 23 trägt. Der Linearantrieb der Transfereinrichtung 19 kann einen Shuttlezylinder 24 aufweisen, der von einem mit einem Druckmittel betätigten Zylinder, insbesondere einem druckluftbetätigten Zylinder oder auch einem Servomotor elektronisch antreibbar ist. Vom Shuttlezylinder 24 ist die Doppelklammer 23 auf einer geradlinigen Bahn bewegbar, die im gezeigten Ausführungsbeispiel horizontal verläuft, aber auch über einen aufwärts- oder abwärtsgeneigten Verlauf verfügen kann.

Die Doppelklammer 23 verfügt über zwei benachbarte gleiche, aber spiegelbildlich voneinander angeordnete Klammern 25. Die beiden Klammern 25 sind über einen Steg der Doppelklammer 23 miteinander verbunden, so dass sie einstückig zusammenhängen. Beide Klammern 25 verlaufen parallel zueinander und sind voneinander beabstandet, wodurch zwischen den Klammern 25 ein Zwischenraum 26 entsteht.

Die Doppelklammer 23 ist im gezeigten Ausführungsbeispiel mit einem auf der geradlinigen Bahn bewegbaren Läufer des Shuttlezylinders 24 drehbar verbunden. Die Doppelklammer 23 kann anstatt auf einer geradlinigen Bahn aber auch auf einer anderen Bahn verfahrbar oder schwenkbar sein. Die Doppelklammer 23 kann durch einen geeigneten Antrieb um mindestens einen bestimmten Winkelbereich verdreht werden. Dabei verläuft eine Drehachse 27 der Doppelklammer 23 parallel zu den Klammern mittig zwischen den beiden beabstandeten Klammern 25 der Doppelklammer 23 hindurch. Ebenso erstreckt sich die Drehachse 27 mittig durch den Zwischenraum 26 zwischen den Klammern 25.

Es ist denkbar, dass die Doppelklammer 23 zusätzlich um eine die Drehachse 26 senkrecht schneidende Schwenkachse 28 verschwenkbar ist, und zwar ebenfalls durch einen geeigneten Antrieb.

Der Antrieb zum Verdrehen der Doppelklammer 23 um die Drehachse 27 und/oder zum Verschwenken der Doppelklammer 23 um die Schwenkachse 28 ist bevorzugt als ein sogenannter Servoantrieb ausgebildet, mit dem Verdrehungen oder Verschwenkungen der Doppelklammer 23 um exakt vorgebbare Winkelbereiche möglich sind.

Die das jeweilige einzelne Wäschestück 10 aus der Doppelklammer 23 übernehmende und in das Klammermaul 21 der zu beladenden Klammer 11 einschiebende Beladeeinrichtung 20 verfügt über zwei vorzugsweise identische Klammern 29. Auch diese beiden Klammern 29 der Beladeeinrichtung 20 sind parallel zueinander verlaufend voneinander beabstandet. Der Abstand dieser beiden Klammern 29 ist kleiner als der Abstand der beiden Klammern 25 der Doppelklammern 23, und zwar derart, dass die beiden parallelen Klammern 29 der Beladeeinrichtung 20 in den Zwischenraum 26 zwischen den beiden Klammern 25 der Doppelklammern 23 gelangen können. Folglich ist die Breite des Zwischenraums 26 der Doppelklammer 23 größer als der Abstand der Außenseiten der beiden benachbarten Klammern 29 der Beladeeinrichtung 20. Jeder Klammer 29 der Beladeeinrichtung 20 ist ein eigener Linearantrieb zugeordnet, der im gezeigten Ausführungsbeispiel auch als ein druckmittelbetätigter Shuttlezylinder 30 ausgebildet ist. Die Shuttlezylinder 30 sind wie die Klammern 29 gleich ausgebildet, aber spiegelbildlich zueinander angeordnet. Ein im Vergleich zum Zwischenraum 26 schmalerer Zwischenraum 31 zwischen den Klammern 29 und den Shuttlezylindern 30 der Beladeeinrichtung 20 ist so bemessen, dass er größer ist als die Breite der gleichen Klammern 11 unter dem Förderer 12, vorzugsweise zweimal bis viermal so groß. Dadurch können sich die den Shuttlezylindern 30 zugeordneten Klammern 29 auf beiden Seiten an der jeweils zu beladenden Klammer 11 vorbeibewegen. Dabei ist die Anordnung und Bemessung der Beladeeinrichtung 20, insbesondere jedes Shuttlezylinders 30 und die diesem zugeordnete Klammer 29, derart gewählt, dass die Klammermäuler 32 der Klammern 29 beim Entlangbewegen derselben auf gegenüberliegenden Seiten der jeweilig zu beladenden Klammer 11 auf einer vorzugsweise geradlinigen Bewegungsbahn, gegebenenfalls aber auch einer bogenförmigen Bewegungsbahn, seitlich neben der Klammer 11 vorbeifahrbar sind. Die Klammermäuler 32 der Klammern 29 der Beladeeinrichtung 20 sind genauso gerichtet wie das Klammermaul 21 der zu beladenden Klammern 11 und auch zur gleichen Seite hin offen.

Die Doppelklammer 23 der Transfereinrichtung 19 ist in der Übergabeposition des Wäschestücks 10 zu den Klammern 29 der Beladeeinrichtung 20 derart um ihre Schwenkachse 28 geschwenkt oder - wenn sie nicht verschwenkbar ist - derart positioniert, dass Klammermäuler 33 zum offenen Ende hin schräg abwärtsgeneigt sind. Im gezeigten Ausführungsbeispiel verlaufen die Klammermäuler 33 der Doppelklammern 23 unter einem Winkel von 90° zu den Klammermäulern 32 der Klammern 29 der Beladeeinrichtung 20. Dann findet die Übergabe bei um 90° versetzten, quergerichteten Klammermäulern 32 und 33 statt. Es ist aber ein alternatives Ausführungsbeispiel der Vorrichtung denkbar, bei der die Klammermäuler 32 der Klammern 29 der Beladeeinrichtung 20 und die Klammermäuler 33 der Klammern 25 der Doppelklammer 23 auf der gleichen Achse liegen. Bei dieser Achse handelt es sich vorzugsweise um parallele Linearachsen, auf denen die Klammern 29 der Beladeeinrichtung 20 von den ihnen zugeordneten Shuttlezylindern 30 von der Transfereinrichtung 19 zur zu beladenden Klammer 11 und umgekehrt verfahrbar sind. Dann weisen die offenen Seiten bzw. Enden der Klammermäuler 32 der Klammern 29 der Beladeeinrichtung 20 und der Klammermäuler 33 der Klammern 25 der Doppelklammer 23 zueinander. Dadurch ist der von der Doppelklammer 23 gehaltene Randabschnitt 34 bzw. Randstreifen 35 des jeweiligen Wäschestücks 10 von den Klammern 29 der Beladeeinrichtung 20 geradlinig aus den Klammern 25 der Doppelklammer 23 der Transfereinrichtung 19 herausziehbar.

Auch das Klammermaul 21 der zu beladenden Klammer 11 ist so ausgerichtet, dass es in einer Richtung parallel zu den ebenfalls parallelen geradlinigen und vorzugsweise schräg ansteigend verlaufenden Linearachsen der Shuttlezylinder 30 liegt. Dazu wird die zu beladende Klammer 11 vom Förderer 12 momentan stillstehend an der tiefsten Stelle der unteren Umlenkung des U-förmigen Beladeabschnitts 22 vom Förderer 12 so bereit gehalten, dass die Klammer 11 gleichgerichtet mittig zwischen den beiden parallelen beabstandeten geradlinigen Linearachsen der Shuttlezylinder 30 für die Klammern 29 der Beladeeinrichtung 20 verläuft. Dabei liegt das Klammermaul 21 der jeweils zu beladenden Klammer 11 gleichgerichtet zu den geradlinigen und parallelen Bewegungsbahnen der Klammern 29 zwischen den parallelen Linearachsen der beiden Shuttlezylinder 30, so dass nicht nur die Linearachsen parallel zueinander verlaufen, sondern auch das Klammermaul 21 der zu beladenden Klammer 11.

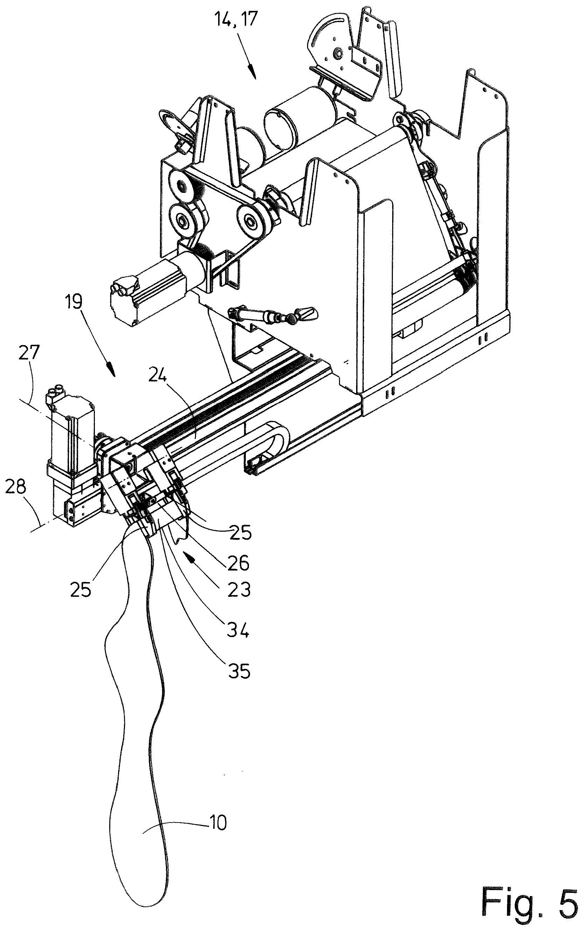

Nachfolgend wird das erfindungsgemäße Verfahren in Bezug auf insbesondere die Transfereinrichtung 19, die Beladeeinrichtung 20 und die Beladung jeweils einer vom Förderer 12 bereit gehaltenen Klammer 11 erläutert:
Vom die Nachvereinzelungseinrichtung 17 durchlaufenen und mit der hinteren Ecke 18 an der Nachvereinzelungseinrichtung 17 noch gehaltenem Wäschestück 10 ergreift die Doppelklammer 23 der Transfereinrichtung 19 das Wäschestück 10. Dabei wird im Zwischenraum 26 zwischen den Klammern 25 der Doppelklammer 23 ein schmaler Randstreifen 35 des Wäschestücks 10 mit gestrecktem Randabschnitt 34 festgeklemmt. Dieser gestreckte Randabschnitt 34 kann direkt von der hinteren Ecke 18 ausgehen oder - wie im gezeigten Ausführungsbeispiel - etwas von der hinteren Ecke 18 beabstandet sein (Fig. 5).

Nachdem die Doppelklammern 23 das Wäschestück 10 ergriffen und im Zwischenraum 26 den gestreckten Randstreifen 35 ausgebildet hat, wird die Doppelklammer 23 vorzugsweise im Uhrzeigersinn um ihre Drehachse 27 verdreht, und zwar vorzugsweise um 90°. Dabei kann gegebenenfalls die Doppelklammer 23 auch um ihre Schwenkachse 28 so verschwenkt werden, dass die Klammermäuler 33 der beiden Klammern 25 der Doppelklammern 23 zu ihren offenen Enden hin abwärtsgeneigt verlaufen um beispielsweise 45°. Falls die Doppelklammer 23 nicht um die Schwenkachse 28 verschwenkbar sein sollte, verfügt die Doppelklammer 23 über eine unveränderliche Neigung, die zu den offenen Enden der Klammermäuler 33 abwärtsgerichtet ist (Fig. 5).

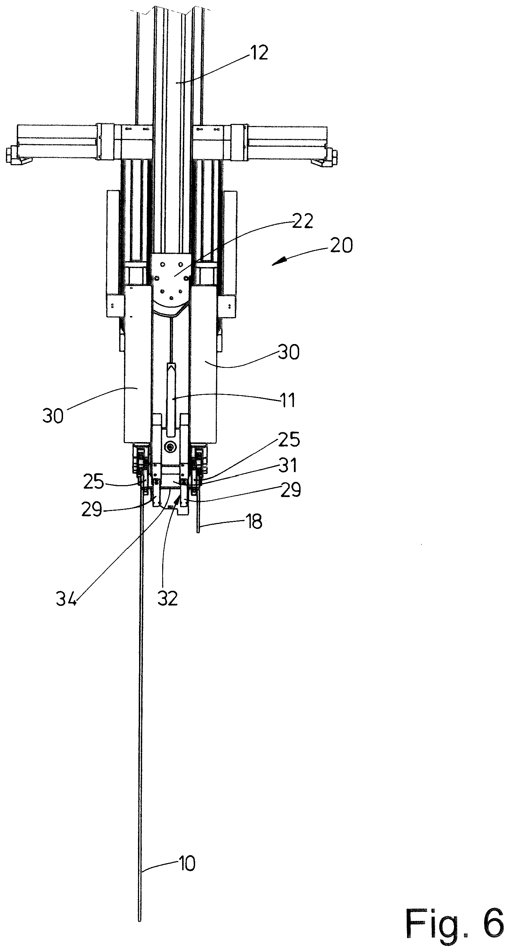

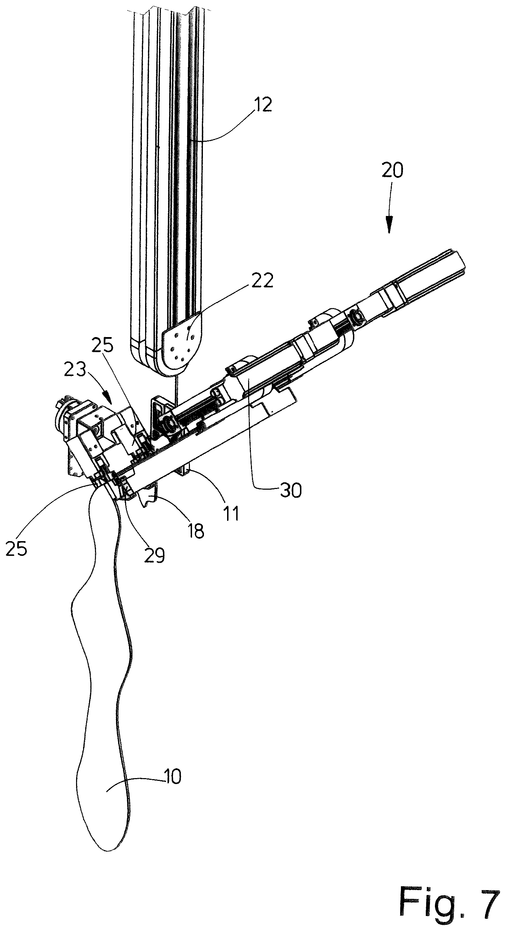

Gleichzeitig während des Verdrehens und gegebenenfalls Verschwenkens der Doppelklammer 23 oder gegebenenfalls auch davor oder danach wird die Doppelklammer 23 vom diese tragenden Shuttlezylinder 24 auf einer geradlinigen, vorzugsweise horizontalen Bahn neben die Nachvereinzelungseinrichtung 17 verfahren, und zwar so, dass die Doppelklammer 23 am Ende dieses Verfahrvorgangs sich außerhalb des Bereichs der Nachvereinzelungseinrichtung 17 befindet, vorzugsweise seitlich daneben und/oder darunter (Fig. 5). Danach befindet sich die Doppelklammer 23 der Transfereinrichtung 19 in einer Position zur Übergabe oder Übernahme des gestreckten Randabschnitts 34 und vorzugsweise geradlinigen Randstreifens 35 des Wäschestücks 10 an die beiden parallelen beabstandeten Klammern 29 der Beladeeinrichtung 20 (Fig. 6 und 7). Die Position der Doppelklammer 23 ist dann abgestimmt auf die Positionen der Klammern 29 der Beladeeinrichtung 20, indem die Klammern 29 der Doppelklammer 23 miteinander korrespondieren.

Zur Aufnahme des Wäschestücks 10 fahren die beiden parallelen Shuttlezylinder 30 die beabstandeten Klammern 29 synchron auf den parallelen geradlinigen Bahnen in Richtung zur Doppelklammer 23 der Transfereinrichtung 19. Dabei gelangen die Klammern 29 der Beladeeinrichtung 20 in den Zwischenraum 26 zwischen den beiden Klammern 25 der Doppelklammer 23. Dies ist möglich, weil die gegenüberliegenden Außenseiten der beiden Klammern 29 der Beladeeinrichtung 20 einen geringeren Abstand aufweisen als der Zwischenraum 26 zwischen den Klammern 25 der Doppelklammern 23 breit ist.

Beim synchronen Verfahren der Klammern 29 der Beladeeinrichtung 20 zwischen die Klammern 25 der Doppelklammer 23 der Transfereinrichtung 19 sind die Klammern 29 noch geöffnet. Die Klammern 29 werden so weit zwischen die Klammern 25 gefahren, damit nach dem Schließen der Klammern 29 ihre Klammermäuler 32 den Randabschnitt 34 bei gestrecktem Randstreifen 35 des Wäschestücks 10 in der Doppelklammer 23 ergreifen können. Nach dem Schließen der Klammern 29 der Beladeeinrichtung 20 werden die Klammern 25 der Doppelklammern 23 vorzugsweise gleichzeitig geöffnet. Gegebenenfalls kann sich aber auch das Schließen der Klammern 29 und das Öffnen der Klammern 25 überlappen, indem kurz vor dem vollständigen Schließen der Klammern 29 die Klammern 25 schon geöffnet werden. Sobald die Klammer 29 der Beladeeinrichtung 20 geschlossen und die Klammern 25 der Doppelklammern 23 geöffnet sind, werden die Klammern 29 in Richtung zur zu beladenden Klammer 11 zurückgefahren und die Doppelklammer 23 der Transfereinrichtung 19 in die Ausgangsstellung unter die Nachvereinzelungseinrichtung 17 zurückgefahren zur Übernahme eines nächsten Wäschestücks 10.

Nachdem die beabstandeten parallelen Klammern 29 der Beladeeinrichtung 20 das Wäschestück 10 übernommen haben, halten sie auch den Randabschnitt 34 bei gestreckten Randstreifen 35 des Wäschestücks 10. Allerdings ist wegen des im Vergleich zu den Klammern 25 der Doppelklammer 23 geringeren Abstands der Klammern 29 der Beladeeinrichtung 20 der Randabschnitt 34 bzw. Randstreifen 35 schmaler, nämlich nur so schmal wie der Zwischenraum 31 zwischen den benachbarten Klammern 29. Dabei liegt der gestreckte Randabschnitt 34 an der geschlossenen Seite der Klammermäuler 32 der Klammern 29.

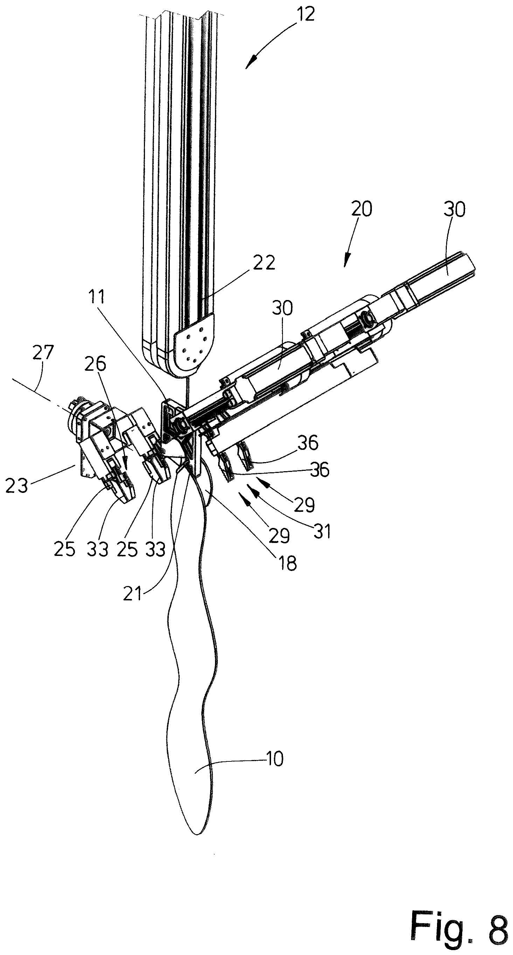

Die beiden parallelen Shuttlezylinder 24 bewegen das übernommene Wäschestück 10 synchron von der Transfereinrichtung 19, und zwar ihrer Doppelklammer 23, entlang der geradlinigen Bahn weg. Dabei fahren die das Wäschestück 10 haltenden Klammern 29 der Beladeeinrichtung 20 auf gegenüberliegenden Flachseiten der am unteren Ende des Beladeabschnitts 22 vom Förderer 12 bereitgehaltenen, stillstehenden Klammer 11 entlang. Hierbei überholen die Klammern 29 quasi die zu beladende Klammer 11. Bei diesem Überholvorgang erfolgt die Übergabe des Randstreifens 35 mit dem gestreckten Randabschnitt 34 des Wäschestücks 10 an die dazu momentan stillstehende, zu beladende Klammer 11 (Fig. 7 und 8).

Infolge der parallelen und in etwa gleich gerichteten Klammermäuler 32 der Klammern 29 und des Klammermauls 21 der zu beladenden Klammern 11 wird so der zwischen den Klammern 29 gehaltene Randstreifen 35 mit voraneilendem Randabschnitt 34 in das Klammermaul 21 der zu beladenden Klammer 11 geschoben. Dabei wird der Randstreifen 35 des Wäschestücks 10 im Klammermaul 21 der Klammer 11 fixiert und die Klammern 29 der Beladeeinrichtung 20 während ihres Weitertransports entlang der von den Shuttlezylindern 30 vorgegebenen geradlinigen Bahnen zu gegebener Zeit geöffnet und/oder der Randstreifen 35 des Wäschestücks 10 nach dem Einschieben desselben in das Klammermaul 21 der Klammer 11 aus den Klammermäulern 32 der benachbarten Klammern 29 der Beladeeinrichtung 20 herausgezogen.

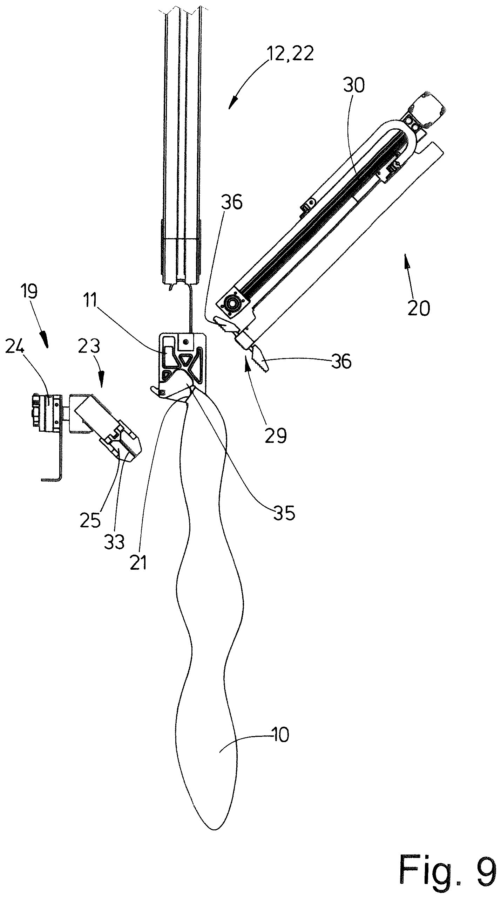

Im gezeigten Ausführungsbeispiel werden beide gleichen Klammerhälften 36 jeder Klammer 29 um jeweils 90° gegensinnig verschwenkt und dadurch die Klammern so weit geöffnet, dass die gegenüberliegende Seiten des Klammermauls 32 begrenzenden Klemmflächen der Klammerhälften 36 auf einer geraden Linie liegen, die die lineare Bewegungsachse der Shuttlezylinder 30 rechtwinklig schneidet (Fig. 8 und 9). Zu diesem Zweck sind auch die Klammern 29 mit geeigneten Antrieben versehen.

Die Klammern 11 des Förderers 12 sind im gezeigten Ausführungsbeispiel passiv ausgebildet. Das heißt, es ist jedem Klammermaul 32 eine im schließenden Sinne federvorgespannte Sperrklinke zugeordnet. Beim Einschieben des Randstreifens 35 des Wäschestücks 10 in die Klammermäuler 32 der Klammern 29 klemmen die Sperrklinken selbsttätig den in die Klammermäuler 32 eingeschobenen Randstreifen 35 des Wäschestücks 10 fest. Das Lösen bzw. Öffnen der Klammern 11 erfolgt im Verlauf der Sortierstation durch externe Betätigungsmittel, die die Sperrklinke direkt oder indirekt gegen die Federvorspannung verschwenken zum Öffnen des Klammermauls 21 der jeweiligen Klammer 11.

Für das nachfolgende Wäschestück 10 wird eine nächste leere Klammer 11 vom Förderer 12 zum unteren Umlenkbogen seines Beladeabschnitts 22 gefahren und hier wiederum momentan abgestoppt zur Beladung mit dem nächsten Wäschestück 10.

Die Erfindung ist nicht beschränkt auf zu beladende Klammern 11, die im unteren Umlenkbereich eines Beladeabschnitts 22 eines Förderers 12 bereitgehalten werden. Die Erfindung eignet sich auch zum Beladen von Klammern 11, die auf andere Weise, insbesondere an einer anderen Stelle, eines beliebigen Förderers bereitgehalten werden.

**Bezugszeichenliste:**

| | | | |
|---|---|---|---|
| 10 | Wäschestück | 35 | Randstreifen |
| 11 | Klammer | 36 | Klammerhälfte |
| 12 | Förderer | | |
| 13 | Gurtförderer | | |
| 14 | Vereinzelungseinrichtung | | |
| 15 | Greifer | | |
| 16 | Shuttlezylinder | | |
| 17 | Nachvereinzelungseinrichtung | | |
| 18 | hintere Ecke | | |
| 19 | Transfereinrichtung | | |
| 20 | Beladeeinrichtung | | |
| 21 | Klammermaul | | |
| 22 | Beladeabschnitt | | |
| 23 | Doppelklammer | | |
| 24 | Shuttlezylinder | | |
| 25 | Klammer | | |
| 26 | Zwischenraum | | |
| 27 | Drehachse | | |
| 28 | Schwenkachse | | |
| 29 | Klammer | | |
| 30 | Shuttlezylinder | | |
| 31 | Zwischenraum | | |
| 32 | Klammermaul | | |
| 33 | Klammermaul | | |
| 34 | Randabschnitt | | |

## Patentansprüche

1. Verfahren zum Beladen einer Klammer (11) mit einem Wäschestück (10), insbesondere mit einem zu sortierenden Wäschestück (10), wobei das Wäschestück (10) von einer Vereinzelungseinrichtung (14) vereinzelt und anschließend an die zu beladende Klammer (11) übergeben wird, wobei von einer verfahrbaren Doppelklammer (23) einer Transfereinrichtung (19) das Wäschestück (10) nach der Vereinzelungseinrichtung (14) ergriffen wird, das Wäschestück (10) aus der Doppelklammer (23) von einer Beladeeinrichtung (20) übernommen oder übergeben wird und das Wäschestück (10) von der Beladeeinrichtung (20) in ein Klammermaul (21) der zu beladenden Klammer (11) eingegeben wird, indem das Wäschestück (10) von zwei benachbarten Klammern (29) der Beladeeinrichtung (20) durch synchrones Verfahren und Vorbeibewegen der benachbarten Klammern (29) an der zu beladenden Klammer (11) in die zu beladende Klammer (11) eingegeben wird, von Klammern (25) der Doppelklammer (23) der Transfereinrichtung (19) und/oder den benachbarten Klammern (29) der Beladeeinrichtung (20) ein sich zwischen den benachbarten Klammern (29) und/oder den Klammern (25) befindender Randstreifen (35), Randabschnitt (34) und/oder Eckbereich des Wäschestücks (10) gestreckt gehalten wird und das Wäschestück (10) mit dem gestreckt von den benachbarten Klammern (29) der Beladeeinrichtung (20) gehaltenen Randstreifen (35), Randabschnitt (34) und/oder Eckbereich beim Vorbeibewegen der benachbarten, beabstandeten Klammern (29) an der zu beladenden Klammer (11) in diese eingeschoben wird.

2. Verfahren nach Anspruch 1, **dadurch gekennzeichnet, dass** an der Doppelklammer (23) der von dieser gestreckt gehaltene Randstreifen (35), Randabschnitt (34) und/oder Eckbereich des Wäschestücks (10) umorientierbar, vorzugsweise verdrehbar und/oder verschwenkbar, ist.

3. Verfahren nach Anspruch 1 oder 2, **dadurch gekennzeichnet, dass** die Beladeeinrichtung (20) einen Schieber aufweist, der vorzugsweise zungen- oder schwertartig ist und der das Wäschestück (10) mit dem von der Doppelklammer (23) gehaltenen Randstreifen (35), Randabschnitt (34) und/oder Eckbereich in das Klammermaul (21) der zu beladenden Klammer (11) einschiebt.

4. Verfahren nach einem der Ansprüche 1 bis 3, **dadurch gekennzeichnet, dass** die zu beladende Klammer (11) zum Übernehmen eines Wäschestücks (10) von den beiden benachbarten Klammern (29) der Beladeeinrichtung (20) in einem unteren Umlenkbereich eines U-förmigen Abschnitts, insbesondere Beladeabschnitts (22), eines Förderers (12) kurzfristig abgestoppt wird und/oder die zu beladende Klammer (11) bei quer zur vertikalen Ebene, in der die Förderstrecke im U-förmigen Abschnitt des Förderers (12) verläuft, ausgerichteten Klammermäulern (32) mit dem Wäschestück (10) beladen wird.

5. Vorrichtung zum Beladen einer Klammer (11) mit einem Wäschestück (10), mit einer auf eine Vereinzelungseinrichtung (14) folgenden Transfereinrichtung (19), die mindestens eine Doppelklammer (23) mit zwei beabstandeten Klammern (25) aufweist, die zum gestreckten Halten eines schmalen Randstreifens (35), Randabschnitts (34) und/ oder Eckbereichs des Wäschestücks (10) ausgebildet ist, mit einer der Transfereinrichtung (19) nachgeordneten Beladeeinrichtung (20), und mit einem Förderer (12), der mehrere zu beladende Klammern (11) aufweist, wobei von der Beladeeinrichtung (20) das Wäschestück (10) in die jeweils zu beladende Klammer (11) überführbar ist, die Beladeeinrichtung (20) zwei benachbarte und/oder beabstandete Klammern (29) aufweist, die zum Übernehmen eines von der Doppelklammer (23) gehaltenen Randstreifens (35), Randabschnitts (34) und/oder Eckbereichs aus der Doppelklammer (23) unter Aufrechterhaltung des gestreckten Zustands des Randstreifens (35), Randabschnitts (34) und/ oder Eckbereichs ausgebildet sind und die benachbarten, beabstandeten Klammern (29) der Beladeeinrichtung (20) an gegenüberliegenden Seiten an der jeweiligen zu beladenden Klammer (11) vorzugsweise synchron entlangfahrbar sind zum Übergeben des jeweiligen Wäschestücks (10) von den beiden Klammern (29) der Beladeeinrichtung (20) an eine bereitgehaltene, zu beladende Klammer (11) und/oder beim Vorbeifahren der beiden benachbarten Klammern (29) der Beladeeinrichtung (20) an der jeweiligen zu beladenden Klammer (11) der gestreckt von den benachbarten Klammern (29) gehaltene Randstreifen (35), Randabschnitt (34) und/ oder Eckbereich des Wäschestücks (10) in die zu beladende Klammer (11) eingeschoben und aus den benachbarten Klammern (29) der Beladeeinrichtung (20) herausziehbar oder von den Klammern (29) der Beladeeinrichtung (20) lösbar ist.

6. Vorrichtung nach Anspruch 5, **dadurch gekennzeichnet, dass** die Doppelklammer (23) verdrehbar und/oder verschwenkbar ist, vorzugsweise die Doppelklammer (23) um eine Drehachse (27) verdrehbar ist, die eine gedachte Verbindungslinie zwischen ihren beiden beabstandeten Klammern (25) senkrecht schneidet.

7. Vorrichtung nach Anspruch 5, **dadurch gekennzeichnet, dass** sich der von der Doppelklammer (23) gestreckt gehaltene schmale Randstreifen (35) an oder in einem Eckbereich des Wäschestücks (10) befindet.

8. Vorrichtung nach Anspruch 5, **dadurch gekennzeichnet, dass** der innere, lichte Abstand der benachbarten Klammern (25) der Doppelklammer (23) größer ist als der außenseitige Abstand der benachbarten und/oder beabstandeten Klammern (29) der Beladeeinrichtung (20).

9. Vorrichtung nach Anspruch 8, **dadurch gekennzeichnet, dass** der lichte Abstand der benachbarten Klammern (29) der Beladeeinrichtung (20) größer ist als die Breite jeder zu beladenden Klammer (11).

10. Vorrichtung nach Anspruch 6, **dadurch gekennzeichnet, dass** die benachbarten Klammern (29) der Beladeeinrichtung (20) längs einer auf der Drehachse (27) der Doppelklammer (23) liegenden, insbesondere diese verlängernden Bahn, vorzugsweise geradlinigen Bahn, hin- und herbewegbar sind.

## Claims

1. A method for loading a clip (11) with an item of laundry (10), in particular with an item of laundry (10) to be sorted, the item of laundry (10) being separated by a separating device (14) and subsequently being transferred to the clip (11) to be loaded, wherein the item of laundry (10) is grasped by a movable double clip (23) of a transfer device (19) downstream of the separating device (14), the item of laundry (10) is taken over or transferred from the double clip (23) by a loading device (20), and the item of laundry (10) is fed by the loading device (20) into a clip mouth (21) of the clip (11) to be loaded, in that the item of laundry (10) is fed by two adjacent clips (29) of the loading device (20) into the clip (11) to be loaded, by synchronous movement and moving of the adjacent clips (29) past the clip (11) to be loaded, a peripheral strip (35), peripheral portion (34) and/or corner region of the item of laundry (10) located between the adjacent clips (29) and/or clips (25) is kept stretched by clips (25) of the double clips (23) of the transfer device (19) and/or by the adjacent clips (29) of the loading device (20) and the item of laundry (10) with the peripheral strip (35), peripheral portion (34) and/or corner region kept stretched by the adjacent clips (29) of the loading device (20) is pushed into the clip (11) to be loaded as the adjacent, spaced-apart clips (29) move past the latter.

2. The method as claimed in claim 1, **characterized in that** the peripheral strip (35), peripheral portion (34) and/or corner region of the item of laundry (10) kept stretched by the double clip (23) can be reoriented, preferably rotatable and/or pivotable, at the double clip (23).

3. The method as claimed in claim 1 or 2, **characterized in that** the loading device (20) has a slider, which is preferably tongue- or sword-like, and which pushes the item of laundry (10) with the peripheral strip (35), peripheral portion (34) and/or corner region held by the double clip (23) into the clip mouth (21) of the clip (11) to be loaded.

4. The method as claimed in one of the claims 1 to 3, **characterized in that,** for taking over an item of laundry (10) from the two adjacent clips (29) of the loading device (20), the clip (11) to be loaded is briefly stopped in a lower deflecting region of a U-shaped portion, in particular of a loading portion (22), of a conveyor (12) and/or the clip (11) to be loaded is loaded with the item of laundry (10) with clip mouths (32) oriented transversely with respect to the vertical plane in which the conveying section in the U-shaped portion of the conveyor (12) runs.

5. An apparatus for loading a clip (11) with an item of laundry (10), with a transfer device (19) following a separating device (14) and having at least one double clip (23) with two spaced-apart clips (25) which is designed keep a narrow peripheral strip (35), peripheral portion (34) and/or corner portion of the item of laundry (10) stretched, with a loading device (20) arranged downstream of the transfer device (19), and with a conveyor (12) which has a plurality of clips (11) to be loaded, wherein the item of laundry (10) can be transferred by the loading device (20) into the respective clip (11) to be loaded, the loading device (20) has two adjacent and/or spaced-apart clips (29) which are designed for taking over a peripheral strip (35), peripheral portion (34) and/or corner region held by the double clip (23), from the double clip (23) with the stretched state of the peripheral strip (35), peripheral portion (34) and/or corner region being maintained and the adjacent spaced-apart clips (29) of the loading device (20) can be moved, preferably synchronously, along on opposite sides of the respective clip (11) to be loaded, in order to transfer the respective item of laundry (10) from the two clips (29) of the loading device (20) to a clip (11) which is held ready and is to be loaded, and/or when the two adjacent clips (29) of the loading device (20) move past the respective clip (11) to be loaded, the peripheral strip (35), peripheral portion (34) and/or corner region of the item of laundry (10) kept stretched by the adjacent clips (29) is pushed into the clip (11) to be loaded and can be pulled out of the adjacent clips (29) of the loading device (20) or can be released from the clips (29) of the loading device (20).

6. The apparatus as claimed in claim 5, **characterized in that** the double clip (23) is rotatable and/or pivotable, preferably the double clip (23) is rotatable about an axis of rotation (27) which perpendicularly intersects an imaginary connecting line between its two spaced-apart clips (25).

7. The apparatus as claimed in claim 5, **characterized in that** the narrow peripheral strip (35) kept stretched by the double clip (23) is located at or in a corner region of the item of laundry (10).

8. The apparatus as claimed in claim 5, **characterized in that** the inner clear distance between the adjacent clips (25) of the double clip (23) is greater than the outside distance of the adjacent and/or spaced-apart clips (29) of the loading device (20).

9. The apparatus as claimed in claim 8, **characterized in that** the clear distance between the adjacent clips (29) of the loading device (20) is greater than the width of each clip (11) to be loaded.

10. The apparatus as claimed in claim 6, **characterized in that** the adjacent clips (29) of the loading device (20) are movable to and fro along a path lying on the axis of rotation (27) of the double clip (23), in particular extending the latter, preferably a rectilinear path.

## Revendications

1. Procédé permettant de charger une pièce de linge (10), en particulier une pièce de linge (10) à trier, sur une pince (11), la pièce de linge (10) étant séparée par un dispositif de séparation (14) et ensuite transmise à la pince à charger (11), dans lequel une double pince déplaçable (23) d'un dispositif de transfert (19) saisit la pièce de linge (10) après le dispositif de séparation (14), la pièce de linge (10) est récupérée ou transmise par un dispositif de chargement (20) à partir de la double pince (23), et la pièce de linge (10) est insérée par le dispositif de chargement (20) dans une mâchoire de pince (21) de la pince à charger (11) en ce que la pièce de linge (10) est insérée dans la pince à charger (11) par deux pinces voisines (29) du dispositif de chargement (20) par un déplacement et passage synchrones des pinces voisines (29) devant la pince à charger (11), en ce que des pinces (25) de la double pince (23) du dispositif de transfert (19) et/ou les pinces voisines (29) du dispositif de chargement (20) maintiennent tendue(s) une bande marginale (35), une partie marginale (34) et/ou une zone de coin de la pièce de linge (10) qui se trouve(nt) entre les pinces voisines (29) et/ou les pinces (25), et en ce que la pièce de linge (10), avec la bande marginale (35), la partie marginale (34) et/ou la zone de coin maintenue (s) tendue (s) par les pinces voisines (29) du dispositif de chargement (20), est insérée dans la pince à charger (11) au moment du passage des pinces voisines espacées (29) devant celle-ci.

2. Procédé selon la revendication 1, **caractérisé en ce que** la bande marginale (35), la partie marginale (34) et/ou la zone de coin de la pièce de linge (10), maintenue(s) tendue(s) par la double pince (23), peut/peuvent être réorientée (s) au niveau de celle-ci, de préférence en étant rotative(s) et/ou pivotante(s).

3. Procédé selon la revendication 1 ou 2, **caractérisé en ce que** le dispositif de chargement (20) présente un poussoir qui se présente de préférence sous forme de languette ou de lame et qui insère la pièce de linge (10) avec la bande marginale (35), la partie marginale (34) et/ou la zone de coin, maintenues par la double pince (23), dans la mâchoire de pince (21) de la pince à charger (11).

4. Procédé selon l'une quelconque des revendications 1 à 3, **caractérisé en ce que** la pince à charger (11) est brièvement arrêtée dans une zone de renvoi inférieure d'une partie en forme de U, en particulier d'une partie de chargement (22), d'un convoyeur (12), afin de récupérer une pièce de linge (10) à partir des deux pinces voisines (29) du dispositif de chargement (20), et/ou **en ce que** la pince à charger (11) est chargée avec la pièce de linge (10) lorsque les mâchoires de pince (32) sont orientées transversalement au plan vertical dans lequel s'étend la voie de transport dans la partie en forme de U du convoyeur (12).

5. Dispositif permettant de charger une pièce de linge (10) sur une pince (11), comprenant un dispositif de transfert (19) suivant un dispositif de séparation (14) et qui présente au moins une double pince (23) dotée de deux pinces espacées (25) qui sont réalisées pour maintenir tendue une étroite bande marginale (35), une partie marginale (34) et/ou une zone de coin de la pièce de linge (10), un dispositif de chargement (20) placé en aval du dispositif de transfert (19), et un convoyeur (12) qui présente plusieurs pinces à charger (11), dans lequel le dispositif de chargement (20) permet de transférer la pièce de linge (10) dans la pince à charger (11) respectivement, le dispositif de chargement (20) présente deux pinces voisines et/ou espacées (29) qui sont réalisées pour récupérer à partir de la double pince (23) une bande marginale (35), une partie marginale (34) et/ou une zone de coin, maintenue par la double pince (23), tout en maintenant l'état tendu de la bande marginale (35), de la partie marginale et/ou de la zone de coin, et les pinces espacées voisines (29) du dispositif de chargement (20) peuvent être déplacées, de préférence de manière synchrone, le long des faces opposées de la pince à charger (11) respective afin de transmettre la pièce de linge (10) respective des deux pinces (29) du dispositif de chargement (20) à une pince à charger (11) préparée, et/ou lors du passage devant les deux pinces voisines (29) du dispositif de chargement (20), au niveau de la pince à charger (11) respective, la bande marginale (35), la partie marginale (34) et/ou la zone de coin de la pièce de linge (10), maintenue tendue par les pinces voisines (29), est insérée dans la pince à charger (11) et peut/peuvent être extraite(s) des pinces voisines (29) du dispositif de chargement (20) ou détachée(s) des pinces (29) du dispositif de chargement (20).

6. Dispositif selon la revendication 5, **caractérisé en ce que** la double pince (23) est rotative et/ou pivotante, de préférence **en ce que** la double pince (23) peut tourner autour d'un axe de rotation (27) qui est perpendiculaire à une ligne de jonction imaginaire entre les deux pinces espacées (25) de celle-ci.

7. Dispositif selon la revendication 5, **caractérisé en ce que** la bande marginale (35) étroite, maintenue tendue par la double pince (23), se trouve sur ou dans une zone de coin de la pièce de linge (10).

8. Dispositif selon la revendication 5, **caractérisé en ce que** la distance libre intérieure des pinces voisines (25) de la double pince (23) est supérieure à la distance côté extérieur des pinces voisines et/ou espacées (29) du dispositif de chargement (20).

9. Dispositif selon la revendication 8, **caractérisé en ce que** la distance libre des pinces voisines (29) du dispositif de chargement (20) est supérieure à la largeur de chaque pince à charger (11).

10. Dispositif selon la revendication 6, **caractérisé en ce que** les pinces voisines (29) du dispositif de chargement (20) peuvent être déplacées en sens alterné le long d'une trajectoire située sur l'axe de rotation (27) de la double pince (23) et en particulier prolongeant celle-ci, de préférence le long d'une trajectoire rectiligne.
